Europäisches Patentamt

European Patent Office

Office européen des brevets

(19)

(11) EP 0 534 284 B1

(12) EUROPÄISCHE PATENTSCHRIFT

(45) Veröffentlichungstag und Bekanntmachung des Hinweises auf die Patenterteilung:
14.05.1997 Patentblatt 1997/20

(51) Int Cl.⁶: **G01B 11/24**, G01B 11/00

(21) Anmeldenummer: 92115764.0

(22) Anmeldetag: 15.09.1992

(54) **Verfahren und Vorrichtung zur Bestimmung der Absolut-Koordinaten eines Objektes**

Method and device for determining the absolute coordinates of an object

Procédé et dispositif pour déterminer les coordonnées absolues d'un objet

(84) Benannte Vertragsstaaten:
**DE FR GB IT**

(30) Priorität: 26.09.1991 DE 4132134
18.10.1991 DE 4134546

(43) Veröffentlichungstag der Anmeldung:
31.03.1993 Patentblatt 1993/13

(73) Patentinhaber: **Steinbichler, Hans, Dr.
D-83115 Neubeuern (DE)**

(72) Erfinder: **Steinbichler, Hans, Dr.
D-83115 Neubeuern (DE)**

(74) Vertreter: **Zinnecker, Armin, Dipl.-Ing. et al
Lorenz-Seidler-Gossel,
Widenmayerstrasse 23
80538 München (DE)**

(56) Entgegenhaltungen:
**EP-A- 0 181 553        EP-A- 0 182 469
EP-A- 0 182 469        EP-A- 0 343 366**

## Beschreibung

Die Erfindung betrifft ein Verfahren zur Bestimmung der Absolut-Koordinaten eines Objektes, bei dem das Objekt durch ein Projektionsgitter mit Licht bestrahlt wird, bei dem das von dem Objekt reflektierte Licht von einem Sensor aufgenommen wird und bei dem die Aufnahme des Sensors ausgewertet wird. Ferner betrifft die Erfindung eine Vorrichtung zur Durchführung eines derartigen Verfahrens, also eine Vorrichtung zur Bestimmung der Absolut-Koordinaten eines Objekts, bestehend aus einer Lichtquelle, einer Projektionsoptik, insbesondere einem tionsobjektiv, einem Projektionsgitter, das durch die Projektionsoptik auf das Objekt abgebildet wird, einem Sensor zum Aufnehmen des von dem Objekt reflektierten Lichts und einem Objektiv, das das von dem Objekt reflektierte Licht auf den Sensor abbildet.

Mit der Moiré-Technik und mit projizierten Linien kann die dreidimensionale Geometrie der Oberfläche eines Objekts bestimmt werden. Dies wird in der Literaturstelle Takasaki, H.: Moiré Topography, Applied Optics, Vol. 9, No. 6, 1970, p. 1457 - 1472 beschrieben.

Die Auswertung der Konturlinienbilder erfolgt durch einen Rechner, beispielsweise mit dem sogenannten Phasenshift- Verfahren, das in den Literaturstellen Dändliker R., Tahlmann R., Willemin J.F.: Fringe Interpretation by Two-Referenz-Beam Holographic Interferography: Reducing Sensitivity to Hologram Misalignment, Oct. Comm. 41.301 (1982), und B. Breuckmann, "Ein Gerätesystem für die rechnergestützte optische Meßtechnik", VDI-Berichte 617, Lasermeßtechnik, S. 245 - 254; beschrieben wird. Bei diesem Phasenshift-Verfahren werden nacheinander phasenverschobene Bilder (Sensor-Aufnahmen) in den Rechner über eine Videokamera eingelesen. Es ist auch möglich, die Konturlinienbilder über eine Fourier-Auswertung zu verarbeiten. Diese Fourier-Auswertung wird in der Literaturstelle Th. Kreis, K. Roesener, W. Jūptner/D, Holografisch interferometrische Verformungsmessung mit dem Fourier-Transformations-Verfahren, Laser 87, Optoelektronik in der Technik, Springer Verlag beschrieben. Ferner kann die Auswertung auch über andere Techniken, bei denen nur ein Konturlinienbild (Sensor-Aufnahme bzw. Videobild) notwendig ist, erfolgen. Dies wird beschrieben in der DE-PS 39 07 430 und in der DE-PS 38 43 396.

Die Moiré-Technik liefert zwar die relative Form der Objekt -Oberfläche. Mit ihr kann im allgemeinen jedoch nicht der absolute Abstand zwischen Sensor (Kamera) und Objekt aus einem Konturlinienbild bestimmt werden. Es ist also nicht möglich, die absoluten Koordinaten (Absolut-Koordinaten) der Objekt-Oberfläche mit den erwähnten, an sich bekannten Techniken und Verfahren zu bestimmen.

Die Absolut-Koordinaten des Objekts werden jedoch benötigt, um die absolute Größe des Objekts zu bestimmen oder die Tiefe des Objekts bei stufenförmigen Querschnitten. Da im Konturlinienbild keine Information über den Abbildungsmaßstab enthalten ist, werden für die Bestimmung der Absolut-Koordinaten zusätzliche, über das Konturlinienbild hinausgehende Informationen benötigt. Diese werden bei bekannten Verfahren durch Abstandsensoren gewonnen oder durch Ändern des Konturlinienabstandes oder durch Verschieben des Objekts oder der Kamera. Hierfür müssen allerdings Massen bewegt werden, was einen stabilen Aufbau der Versuchsanlage erfordert und verhältnismäßig viel Zeit in Anspruch nimmt. Der mechanische Aufwand ist sehr hoch, wenn eine gewisse Präzision erreicht werden soll. Ein Verfahren und eine Vorrichtung zur quantitativen Absolutvermessung der dreidimensionalen Koordinaten eines Prüfobjekts mittels Moiré-Technik ist in der älteren, nicht vorveröffentlichten deutschen Patentanmeldung P 40 11 406.6 beschrieben. Bei dem dort beschriebenen Verfahren ist eine Verschiebeeinrichtung zum Verschieben und Messen des Verschiebeweges eines Eichkörpers und/oder des Prüfobjekts senkrecht zur Ebene der Gitter (Projektionsgitter und Referenzgitter) vorhanden. Aus der EP-A-O 343 366 ist ein weiteres Verfahren bekannt, bei dem ebenfalls die Moiré-Technik angewendet wird.

Aus der US-PS 4 802 759 ist ein Verfahren zur Bestimmung der Koordinaten eines Punktes eines Objekts bekannt, bei dem ein Projektionsgitter mit Licht durchstrahlt und auf das Objekt abgebildet wird. Das als Abbildung des Projektionsgitters auf dem Objekt entstehende Muster wird auf einen flächenhaften, ortsauflösenden Sensor abgebildet. Die Koordinaten eines Punktes des Objekts werden durch Triangulation des Punktes vom Projektionsgitter und vom Sensor aus ermittelt. Es wird jedoch lediglich ein einziges Sensorbild aufgenommen. Für die Durchführung des vorbekannten Verfahrens ist es erforderlich, eine Bezugslinie zu identifizieren. Aus der EP-A-O 181 553 ist eine weitere Vorrichtung bekannt, bei der ein Triangulationsverfahren angewendet wird.

Die US-PS 4 564 295 offenbart ein Verfahren, bei dem ein Gitter auf das Objekt projiziert wird. Das Objekt wird dann abgebildet und mit einem Referenzgitter überlagert (Moirè). Das Referenzgitter wird zur Auswertung bewegt bzw. Projektionsgitter und Referenzgitter werden synchron bewegt. Diese synchrone Bewegung der Gitter ruft stationäre Konturlinien auf dem Objekt hervor.

Aus der US-PS 4 641 972 ist ein Verfahren bekannt, bei dem ein sinusförmiges Gitter auf das Objekt projiziert und das Objekt unter einem Winkel beobachtet wird. Die Auswertung erfolgt mit der Phasenshifttechnik. Eine Auswertung über eine Triangulation findet nicht statt.

Die US-PS 4 349 277 offenbart ein Verfahren bei dem farbige Gitter mit mindestens zwei verschiedenen Wellenlängen auf das Objekt projiziert werden. Die Aufnahme erfolgt über Farbfilter zur Wellenlängenselektion auf zwei Diodenzeilen. Äquidistante Gitter in verschiedenen Farben, die zueinander verschoben sind, werden parallel projiziert. Die Auswertung geschieht über das Verhältnis der Intensitäten der jeweiligen Farben.

Hiervon ausgehend liegt der Erfindung die Aufgabe zugrunde, bei einem Verfahren der eingangs angegebenen Art die Absolut-Koordinaten des Objekts auf einfache Weise bestimmen zu können. Ferner besteht die Aufgabe der Erfindung darin, eine Vorrichtung der eingangs angegebenen Art zu schaffen, mit der die Absolut-Koordinaten des Objekts auf einfache Weise bestimmt werden können.

Bei einem Verfahren der eingangs angegebenen Art wird diese Aufgabe gelöst, wie im Patentanspruch 1 angegeben. Zusätzlich kann zur Erhöhung der Genauigkeit der Sensor bewegt werden. Damit läßt sich eine Auflösung unter einem Bildelement (Pixel) erzielen.

Bei dem erfindungsgemäßen Verfahren werden die Absolut-Koordinaten des Objekts aus einer Messung und Berechnung bestimmt. Es werden die Absolut-Koordinaten derjenigen Punkte des Objekts bestimmt, die das auf das Objekt geworfene Licht reflektieren. Dies sind im allgemeinen Punkte an der Oberfläche des Objekts, es können aber auch bei einem zumindest teilweise transparenten Objekt Punkte im Inneren des Objekts sein. Es können auch transparente Objekte (Phasenobjekte) durchleuchtet werden, um Brechzahlen (Dichte des transparentem Mediums) zu bestimmen. Das Objekt kann mit beliebigem Licht bestrahlt werden, vorzugsweise mit weißem Licht. Es ist aber auch möglich, kohärentes Licht, beispielsweise Laserlicht, zu verwenden. Das Projektionsgitter kann sinusförmig, rampenförmig oder rechteckig oder von sonstiger Beschaffenheit sein. Das Projektionsgitter kann durch eine Projektionsoptik auf das Objekt bzw. dessen Oberfläche abgebildet werden. Als Projektionsoptik ist jede Optik geeignet, die das Projektionsgitter auf das Objekt projiziert, vorzugsweise ein Projektionsobjektiv, beispielsweise aber auch ein Michelson-Interferometer.

Der Sensor, der das von dem Objekt bzw. dessen Oberfläche reflektierte Licht aufnimmt, ist ein flächenhafter, ortsauflösender Sensor (Flächensensor), beispielsweise ein CCD-Sensor (Charge Coupled Device) oder eine Videokamera. Er kann das von dem Objekt bzw. von dessen Oberfläche reflektierte Licht durch ein Objektiv empfangen. Die Aufnahme des Sensors wird mit einer an sich bekannten Methode ausgewertet, beispielsweise mit einer Phasenshiftmethode, einer Fourier-Transformation oder mit der Methode der DE-PS 38 43 396.

Die Bestimmung der Absolut-Koordinaten des Objekts erfolgt nach dem Prinzip der Triangulation (Dreiecksberechnung). Um die Absolut-Koordinaten eines Objektpunkts zu bestimmen, wird das Dreieck, bestehend aus Projektionsgitter-Punkt, Sensorpunkt und Objektpunkt, bestimmt. Der Sensorpunkt ist aus dem einzelnen beleuchteten Pixel (picture element) des Sensors bekannt. Aus dem geometrischen Aufbau der Optik ist auch der Winkel von dem Sensorpunkt zum Objektpunkt bekannt. Bestimmt werden müssen demnach noch der zugehörige Gitterpunkt (Punkt auf dem Projektionsgitter) sowie der zu diesem Gitterpunkt gehörende Winkel zum Objektpunkt.

Zu diesem Zweck werden zwei Sensoraufnahmen bei verschiedenen Gitterwinkeln ausgewertet. Dies ermöglicht die Bestimmung des Gitterpunkts und des Winkels vom Gitterpunkt zum Objektpunkt. Damit können wiederum die Absolut-Koordinaten des Objektpunkts bestimmt werden. Als Meßgröße für die Auswertung des Sensors dient die Intensität auf jedem Pixel des Sensors.

Vorzugsweise wird das Gitter (und nicht der Sensor) um einen bestimmten Winkel gedreht. Das Gitter wird um eine senkrecht zur Gitterebene verlaufende Achse gedreht.

Das Gitter kann mit einem Objektiv auf das Objekt abgebildet werden. Statt dessen oder zusätzlich ist es möglich, das Gitter unmittelbar am Objekt oder nahe am Objekt anzuordnen und mit einer Lichtquelle den Schatten des Gitters auf das Objekt zu projizieren.

Bei einem Verfahren der eingangs angegebenen Art wird die der Erfindung zugrundeliegende Aufgabe nach einem weiteren Vorschlag dadurch gelöst, daß das Objekt durch ein erstes Projektionsgitter mit Licht einer ersten Farbe und durch ein zweites Projektionsgitter, das zum ersten Projektionsgitter um einen bestimmten Winkel gedreht ist, mit Licht einer zweiten Farbe bestrahlt, das von dem Objekt reflektierte Licht von zwei Sensoren oder von einem für die beiden Farben empfindlichen Sensor (Farbsensor) aufgenommen, die Aufnahmen des oder der Sensoren ausgewertet und aus den Auswertungen die Absolut-Koordinaten des Objekts bestimmt werden. Eine Drehung des Gitters (bzw. des Sensors) ist nicht erforderlich, weil zwei verschiedenfarbige Gitter, die einen bestimmten Winkel zueinander aufweisen, auf das Objekt aufprojiziert werden. Die Drehung des Gitters wird also ersetzt durch zwei gesondert auswertbare Gitter. Die aufprojizierten Gitter werden auf einen farbempfindlichen Sensor, beispielsweise eine Farbvideokamera, abgebildet. Sie können dort getrennt ausgewertet werden. Die Farben der Gitter können dabei den Empfindlichkeiten des Farbsensors (rot, grün, blau) entsprechen. Die Sensoren arbeiten jeweils farbselektiv, die Bilder werden in den jeweiligen Farben also durch Farbfilter oder gerasterte Farbfilter getrennt.

Vorteilhafte Weiterbildungen sind in den abhängigen Ansprüchen beschrieben.

Die Auswertung erfolgt vorzugsweise nach der Formel

$$I\,(r,\,phi) = f\,(a,\,b,\,g,\,\alpha)$$

Hierin bedeuten:

I =          Intensität (Leuchtdichte) auf einem Punkt (Pixel) des Sensors

r =       Radius, also Abstand des Punkts auf dem Projektionsgitter (Gitterpunkt) von einem Bezugspunkt des Projektionsgitters, wobei dieser Bezugspunkt vorzugsweise der Drehpunkt des Projektionsgitters ist

phi =     Drehwinkel des Projektionsgitters zwischen der ersten und der zweiten Auswertung bzw. Winkel zwischen den beiden (farbigen) Gittern

a =       Untergrundhelligkeit

b =       Kontrast

g =       Gitterkonstante des Projektionsgitters

$\alpha$ =       Phasenkonstante

Der gesuchte Punkt in dem Projektionsgitter (Gitterpunkt) kann in Polarkoordinaten $(r, phi_o)$ angegeben werden, wobei $phi_o$ der Winkel des Punktes auf dem Projektionsgitter (Gitterpunkt) zu einer Bezugsgeraden ist. Man erhält dann die Intensitätsverteilung (Leuchtdichteverteilung) I eines linearen, vorzugsweise sinusförmigen, Gitters mit der Gitterperiode g durch die oben angegebene Formel. Die Intensität I wird vom Sensor gemessen. Sie ist in der durch die oben angegebene Formel bestimmten Weise vom Gitterpunkt mit den Polarkoordinaten r, $phi_o$ abhängig. Die vom Sensor gemessene Intensität entspricht der Leuchtdichte des zugehörigen Objektpunkts. Da zwei Aufnahmen bei verschiedenen Gitterwinkeln gemacht werden, stehen zur Auswertung zwei Gleichungen nach der oben angegebenen Formel zur Verfügung. Daraus können die beiden Unbekannten r und $phi_o$ bestimmt werden. Hieraus wiederum ergibt sich nach der Methode der Triangulation die Absolut-Koordinate des zugehörigen Objektpunkts.

Die Größe b/a wird auch als Modulation des Gitters bezeichnet.

Die Leuchtdichte I wird auf das Objekt und von dort auf den Sensor abgebildet. Wenn phi durch die Drehung des Projektionsgitters geändert wird, ändert sich auch die Intensität am zugehörigen Pixel des Sensors. Diese Intensitätsänderung erlaubt es durch Einlesen mehrerer, mindestens zweier, Bilder, die sich durch die Winkellage phi des Gitters unterscheiden, r und sin (phi - $phi_o$) und damit auch $phi_o$ zu bestimmen. Hiermit wiederum kann die Triangulation zur Bestimmung des Objektpunkts durchgeführt werden.

Es ist auch möglich, das Projektionsgitter mehrmals zu drehen, also Sensoraufnahmen bei mehr als zwei Winkeln durchzuführen. Bei der Verwendung einer Farbkamera werden vorzugsweise drei Aufnahmen entsprechend den Empfindlichkeiten rot, grün, blau des Farbsensors ausgewertet. Bei der Messung können also mehrere Winkel $phi_i$ eingestellt werden, um die Genauigkeit zu erhöhen, und eine Phasenshift-Auswertung (oder eine andere der oben beschriebenen Auswertungen) durchgeführt werden. Grundsätzlich reichen zwei Messungen (i = 2) für zwei verschiedene Gitterwinkel, da nur zwei Größen, nämlich r und $phi_o$ für die Bestimmung der Absolut-Koordinaten des Objektpunkts benötigt werden. Zur Erhöhung der Genauigkeit können jedoch mehrere Messungen durchgeführt werden. Im Endergebnis werden für jeden Objektpunkt, der von dem Sensor erfaßt wird, für jeden Sensorpunkt (Pixel) unabhängig die Absolut-Koordinaten des Objektpunkts angegeben.

Vorzugsweise erfolgen die Auswertungen nach der Phasenshiftmethode. Es ist aber auch möglich, die Auswertungen nach einer Fourier-Transformation vorzunehmen. Die Auswertungen können auch mit phasenverschobenen Bildern erfolgen, die gleichzeitig eingelesen werden (dies ist aus der DE-PS 38 43 396 an sich bekannt).

Bei einer Vorrichtung der eingangs angegebenen Art wird die der Erfindung zugrundeliegende Aufgabe dadurch gelöst, daß das Projektionsgitter und/oder der Sensor drehbar, also in verschiedene Winkellagen bringbar, ist und daß eine Auswerteeinheit vorhanden ist, die die Aufnahmen des Sensors bei mindestens zwei verschiedenen Winkellagen des Projektionsgitters bzw. des Sensors auswertet und daraus die Absolut-Koordinaten des Objekts bestimmt.

Vorzugsweise ist das Projektionsgitter (und nicht der Sensor) drehbar. Eine Drehbarkeit des Projektionsgitters kann nämlich mit weniger Aufwand, insbesondere mit weniger mechanischem Aufwand, realisiert werden als eine Drehbarkeit des Sensors.

Nach einem weiteren Vorschlag wird bei einer Vorrichtung der eingangs angegebenen Art die der Erfindung zugrundeliegende Aufgabe gelöst durch ein erstes Projektionsgitter für Licht einer ersten Farbe, ein zweites Projektionsgitter, das zum ersten Projektionsgitter um einen bestimmten Winkel gedreht ist, für Licht einer zweiten Farbe, zwei Sensoren oder einen für die beiden Farben empfindlichen Sensor und eine Auswerteeinheit, die die Aufnahmen des oder der Sensoren auswertet und daraus die Absolut-Koordinaten des Objekts bestimmt. Anstelle eines einzigen Gitters, für das eine Drehmöglichkeit vorgesehen werden muß, werden also (mindestens) zwei Projektionsgitter verwendet, die in einem bestimmten Winkel zueinander stehen und die vom Sensor getrennt auswertbar sind.

Vorteilhafte Weiterbildungen sind Gegenstand der weiteren abhängigen Ansprüche.

Vorzugsweise erfolgen die Auswertungen nach der oben erläuterten Formel.

Die Auswertungen können nach einer Phasenshiftmethode erfolgen. Sie können aber auch nach einer Fourier-Transformation erfolgen. Ferner können die Auswertungen mit phasenverschobenen Bildern erfolgen, die gleichzeitig eingelesen werden (dies wird in der DE-PS 38 43 396 beschrieben).

Eine weitere vorteilhafte Weiterbildung ist gekennzeichnet durch ein Referenzgitter, durch das das von dem Objekt reflektierte Licht auf den Sensor abgebildet wird. Dieses Referenzgitter erhöht die erreichbare Auflösung. Vorzugsweise wird das Referenzgitter von dem Sensor selbst gebildet. Wenn der Sensor - wie beispielsweise ein CCD-Sensor - zeilenweise aufgebaut ist, bildet er durch diesen zeilenweisen Aufbau gleichzeitig ein Referenzgitter. Das Referenzgitter und der Sensor werden damit auf besonders einfache Weise durch ein und dasselbe Bauteil realisiert.

Vorzugsweise liegen die Hauptebenen der Objektive (Projektionsobjektiv und Objektiv für den Sensor) in derselben Ebene; die Hauptebenen der Objektive sind also vorzugsweise miteinander fluchtend angeordnet. Daraus ergibt sich der Vorteil, daß die Moiré-Flächen Ebenen darstellen. Dies erleichtert die Bestimmung (Berechnung) der Absolut-Koordinaten. Der visuelle Eindruck der entstehenden Bilder entspricht demjenigen von (topographischen) Höhenlinien und ist eindeutig.

Vorteilhaft ist es, wenn die Brennweiten der Objektive gleich groß sind. Dies ist insbesondere dann von Vorteil, wenn die Hauptebenen der Objektive in derselben Ebene liegen. Die Bestimmung (Berechnung) der Absolut-Koordinaten wird durch gleich große Brennweiten weiter vereinfacht.

Das Projektionsgitter kann eine sinusförmige oder rampenförmige Transparenz aufweisen. Auch andere ProjektionsgitterTransparenzen sind allerdings möglich, beispielsweise rechteckige oder dreieckige oder sonstige Transparenzen.

Nach einer weiteren vorteilhaften Weiterbildung ist die Gitterkonstante und/oder die Transparenz des Projektionsgitters einstellbar und/oder drehbar. Die Drehung des Projektionsgitters gitters erfolgt dann nicht durch mechanisches Drehen des sondern über einstellbare Masken, beispielsweise nergesteuerte LCD (liquid crystal display = Flüssigkristall-Display)-Masken, deren Gitterkonstante, Intensitätsverlauf und Gitterorientierung beliebig und auf einfache Weise eingestellt werden kann. Dementsprechend wird das Projektionsgitter vorzugsweise von einem LCD-Display gebildet.

Durch die Erfindung wird ein Verfahren und eine Vorrichtung zur Bestimmung der Absolut-Koordinaten (Absolutmessung) der dreidimensionalen Gestalt von Objekten (Körpern) mit der Moiré-Technik oder mit aufprojizierten Linien geschaffen. Zur Bestimmung der Absolut-Koordinaten wird das Prinzip der Triangulation verwendet. Es ergibt sich der Vorteil, daß nur das Projektionsgitter mechanisch bewegt werden muß, was mit einem sehr geringen mechanischen Aufwand und sehr präzise realisiert werden kann, nicht aber (wie bisher) das Objekt oder die Aufnahmeoptik. Das Projektionsgitter hat eine verhältnismäßig geringe Masse, im Gegensatz zur Aufnahmeoptik und zum aufzunehmenden Objekt. Bei einer Bewegung der Optik oder des Objekts entstehen aufgrund der verhältnismäßig großen Massen Durchbiegungen, was nach der Erfindung vermieden wird. Wenn mit einem Farbsensor gearbeitet wird, sind überhaupt keine mechanisch bewegten Teile vorhanden. Auch dann, wenn mit einem Projektionsgitter gearbeitet wird, dessen Gitterkonstante bzw. Transparenz einstellbar ist, beispielsweise mit einem LCD-Display, sind keine mechanisch bewegten Teile vorhanden.

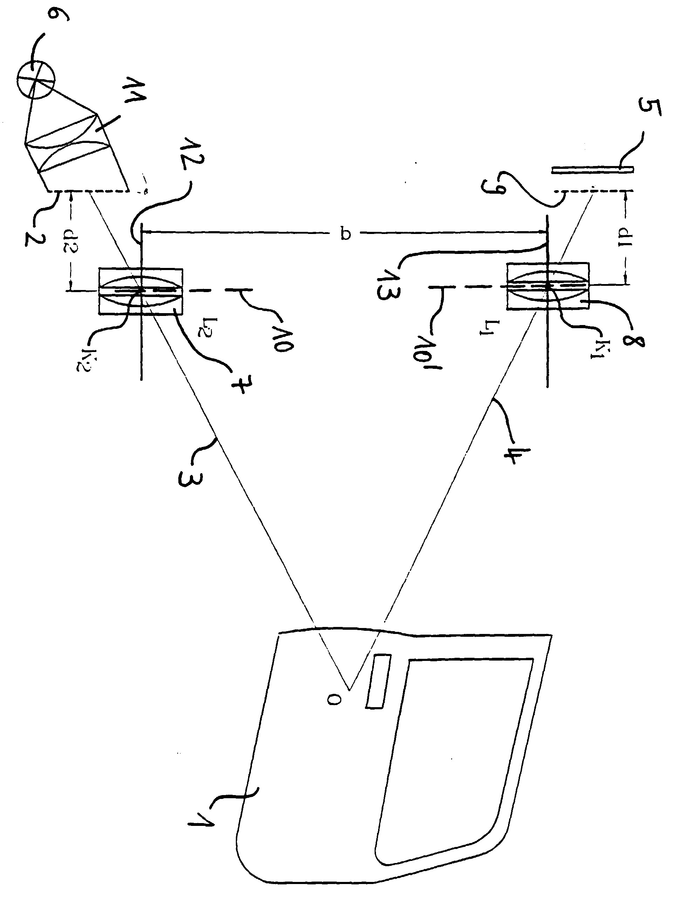

Ein Ausführungsbeispiel der Erfindung wird nachstehend anhand der beigefügten Zeichnung im einzelnen erläutert. In der Zeichnung zeigt die

einzige Figur     eine Vorrichtung zur Bestimmung der Absolut-Koordinaten eines Objekts in einer schematischen Darstellung.

Die Lichtquelle 6 sendet weißes Licht aus, das von dem Kondensor 11 gebündelt wird und durch das Projektionsgitter 2 hindurchtritt. Das Projektionsgitter 2 wird durch das Projektionsobjektiv 7 auf das Objekt 1 bzw. auf dessen Oberfläche abgebildet. Die Hauptebene 10 des Projektionsobjektivs 7 verläuft parallel zur Ebene des Gitters 2, und zwar im Abstand d2.

Das vom Objekt 1 reflektierte Licht 4 gelangt durch das Objektiv 8 hindurch auf den Sensor 5. Es kann, muß aber nicht, ein Referenzgitter 9 eingefügt werden. Die Hauptebene 10' des Objektivs 8 liegt in der Zeichnung in derselben Ebene wie die Hauptebene 10 des Projektionsobjektivs 7. Dies ist aber grundsätzlich nicht notwendig, kann aber Vorteile bringen. Das Referenzgitter 9 verläuft parallel zur Hauptebene 10' des Objektivs 8, und zwar im Abstand d1, der genauso groß ist wie der Abstand d2. In Strahlungsrichtung unmittelbar hinter dem Referenzgitter 9 befindet sich der Sensor 5. Aus Gründen der vereinfachten zeichnerischen Darstellung ist in der einzigen Figur ein Abstand zwischen dem Sensor 5 und dem Referenzgitter 9 gezeigt, der bei der praktischen Realisierung allerdings nicht vorhanden ist. Ferner wird beim tatsächlichen Aufbau ein CCD-Sensor verwendet, dessen Pixel zeilenweise angeordnet sind, so daß dieser CCD-Sensor 5 gleichzeitig das Referenzgitter 9 bildet. Die Gitterlinien des Referenzgitters 9 verlaufen senkrecht zur Zeichenebene der einzigen Figur. In der Ausgangslage, also in der unverdrehten Stellung, verlaufen auch die Gitterlinien des tionsgitters 2 senkrecht zur Zeichenebene. In dieser Ausgangslage sind also die Gitterlinien des Projektionsgitters 2 zu den Gitterlinien des Referenzgitters 9 parallel.

Die optischen Achsen des Projektionsobjektivs 7 und des Objektivs 8 verlaufen in der Zeichnung parallel zueinander und im Abstand b voneinander. Die Parallelität ist nicht notwendig, kann aber Vorteile bringen. Die Brennweiten der Objektive 7, 8 sind gleich groß. Die Gitter 2, 9 liegen im Tiefenschärfebereich der Objektive 7, 8.

Das Projektionsgitter 2 ist um die optische Achse 12 des Projektionsobjektivs drehbar.

Von jedem Punkt des Projektionsgitters 2 verläuft ein Strahl 3 durch den Mittelpunkt K2 des Projektionsobjektivs 7 zum Objektpunkt O. Von diesem Objektpunkt O verläuft der Strahl 4 durch den Mittelpunkt K1 des Objektivs 8 auf einen bestimmten Punkt (Pixel) des Sensors 5. Zur Auswertung nach dem Prinzip der Triangulation wird das Dreieck K1, K2, O betrachtet. Die Basis b dieses Dreiecks ist aus dem vorgegebenen geometrischen Aufbau der Optik bekannt. Die Mittelpunkte K1, K2 der Objektive 8, 7 sind im Abstand b voneinander angeordnet. Für alle Punkte im Tiefenschärfenbereich der beiden Objektive 7, 8 definieren die einzelnen Pixel (picture element) des Sensors (CCD-Sensor) 5 zusammen mit ihren Abständen d1 (die bei der in der einzigen Figur dargestellten Anordnung für alle Pixel gleich groß sind, da das Referenzgitter 9 und der CCD-Sensor 5 parallel zur Hauptebene 10' des Objektivs 8 verlaufen) einen Satz von (räumlichen) Winkeln zur optischen Achse 13 des Objektivs 8, unter denen die Oberflächenelemente des Objekts 1 auf dem Sensor 5 abgebildet werden. Damit ist dann auch der Winkel, unter dem ein Flächenelement der Oberfläche des Objekts 1 von dem Mittelpunkt K1 des Objektivs 8 aus erscheint, gegeben bzw. bekannt.

Zur vollständigen Bestimmung des Dreiecks K1, K2, O muß folglich noch der zugehörige Punkt auf dem Projektionsgitter 2 und der zugehörige Winkel für diesen Punkt (Gitterpunkt) auf dem Projektionsgitter 2 bestimmt werden. Damit ist dann die Bestimmung der Absolut-Koordinaten des Punktes O auf der Oberfläche des Objekts 1 möglich.

Jedes Oberflächenelement des Objekts 1 wird durch das Projektionsobjektiv 7 von einem Punkt des Projektionsgitters 2 beleuchtet. Wenn man diesen zu dem Oberflächenpunkt O gehörenden Ort auf dem Projektionsgitter 2 kennt, ergibt sich mit dem Abstand d2 des Projektionsgitters 2 von der Hauptebene 10 des Projektionsobjektivs 7 der Winkel des Strahls 3 zur optischen Achse 12 des Projektionsobjektivs 7. Damit ist die Triangulationsrechnung zur Bestimmung des Dreiecks K1, K2, O durchführbar.

Zur Bestimmung dieses Ortes auf dem Projektionsgitter 2 wird dieses Projektionsgitter 2 um die Achse 12 gedreht, die mit der optischen Achse des Projektionsobjektivs 7 übereinstimmt. Die Drehung des Projektionsgitters 2 kann durch mechanisches Drehen des Projektionsgitters 2 oder über einstellbare Masken, z.B. rechnergesteuerte LCD-Masken (FlüssigkristallDisplays), deren Gitterkonstante, Intensitätsverlauf und Gitterorientierung beliebig eingestellt werden kann, erfolgen.

Gibt man den Ort in der Projektionsgitterebene (Ebene des Projektionsgitters 2) in Polarkoordinaten r, $phi_o$ an, dann erhält man die Leuchtdichteverteilung (Intensitätsverteilung) I eines linearen, vorzugsweise sinusförmigen Projektionsgitters 2 der Periode g nach der oben erwähnten Formel:

$$I\,(r,\,phi) = a + b\cos\left(\frac{2\Pi r}{g} \cdot \sin\,(phi - phi_o) + \alpha\right)$$

Die Bedeutung der einzelnen Formelbuchstaben wurde oben bereits erläutert; hierauf wird verwiesen.

Diese Leuchtdichte I wird auf das Objekt 1 und von dort auf den Sensor 5 abgebildet. Ändert man phi (Winkel des Projektionsgitters 2 zu dessen Drehachse 12), so ändert sich auch die Intensität I am zugehörigen Pixel des Sensors 5. Diese Intensitätsänderung erlaubt durch Einlesen mehrerer (mindestens zwei) Bilder, die sich durch die Winkellage phi des Projektionsgitters 2 unterscheiden, r und sin (phi - $phi_o$) und damit $phi_o$ zu bestimmen. Hieraus wiederum kann die Triangulation durchgeführt werden, also die vollständige Bestimmung des Dreiecks K1, K2, O.

Bei der Messung können mehrere Winkel $phi_i$ eingestellt werden. Es müssen mindestens zwei Winkel eingestellt werden, um die Triangulation durchführen zu können. Es ist aber auch möglich, mehr als zwei Winkel einzustellen, um die Genauigkeit zu erhöhen. Für jeden Winkel phi wird eine Auswertung durchgeführt, beispielsweise nach der Phasenshift-Methode oder nach einer Fourier-Transformation oder mit phasenverschobenen Bildern, die gleichzeitig eingelesen werden (nach der DE-PS 38 43 396). Im Endergebnis werden für jeden Objektort O, der von der Kamera erfaßt wird, für jedes Pixel unabhängig die Absolut-Koordinaten der Objektpunkte O ermittelt.

Eine Drehung des Projektionsgitters 2 ist nicht erforderlich, wenn mindestens zwei verschiedenfarbige Projektionsgitter auf das Objekt 1 aufprojiziert werden, diese Gitter einen Winkel zueinander aufweisen und die aufprojizierten Gitter auf einen farbempfindlichen Sensor, beispielsweise eine Farbvideokamera, abgebildet werden. Die Farben der Gitter können dabei den Empfindlichkeiten des Farbsensors (rot, grün, blau) entsprechen.

Durch Drehung des Projektionsgitters kann eine Triangulationsberechnung ausgeführt werden, die die Ermittlung der koordinaten des Objekts ermöglicht. Durch Projektion verschiedenfarbiger Gitter, die zueinander verdreht sind, und eine entsprechende farbselektive Aufnahme und Auswertung kann auf eine mechanische Drehung des Gitters verzichtet werden.

Durch eine Drehung des Sensors um eine senkrecht zur Sensorfläche verlaufende Achse kann eine Verbesserung der Auflösung unter 1 Pixel erreicht werden.

**Patentansprüche**

1. Verfahren zur Bestimmung der Absolut-Koordinaten eines Objekts (1), bei dem das Objekt (1) durch ein Projektionsgitter (2) mit Licht (3) bestrahlt wird,

bei dem das von dem Objekt (1) reflektierte Licht (4) von einem Sensor (5) aufgenommen wird

und bei dem die Aufnahme des Sensors (5) ausgewertet wird,

**dadurch gekennzeichnet,**

daß bei einer ersten Stellung des Projektionsgitters (2) und des Sensors (5) eine erste Aufnahme und Auswertung vorgenommen werden,

daß anschließend das Projektionsgitter (2) und/oder der Sensor (5) um einen bestimmten Winkel gedreht werden und eine zweite Aufnahme und Auswertung des Sensors (5) vorgenommen werden

und daß aus den Auswertungen die Absolut-Koordinaten des Objekts (1) bestimmt werden.

2. Verfahren nach Anspruch 1, dadurch gekennzeichnet, daß das Projektionsgitter um einen bestimmten Winkel gedreht wird.

3. Verfahren zur Bestimmung der Absolut-Koordinaten eines Objekts (1),

bei dem das Objekt (1) durch ein Projektionsgitter (2) mit Licht (3) bestrahlt wird,

bei dem das von dem Objekt (1) reflektierte Licht (4) von einem Sensor (5) aufgenommen wird

und bei dem die Aufnahme des Sensors (5) ausgewertet wird,

**dadurch gekennzeichnet,**

daß das Objekt (1) durch ein erstes Projektionsgitter (2) mit Licht (3) einer ersten Farbe und durch ein zweites Projektionsgitter, das zum ersten Projektionsgitter um einen bestimmten Winkel gedreht ist, mit Licht einer zweiten Farbe bestrahlt wird,

daß das von dem Objekt (1) reflektierte Licht von zwei Sensoren oder von einem für die beiden Farben empfindlichen Sensor (5) aufgenommen wird,

daß die Aufnahmen des oder der Sensoren (5) ausgewertet werden

und daß aus den Auswertungen die Absolut-Koordinaten des Objekts (1) bestimmt werden.

4. Verfahren nach irgendeinem der vorhergehenden Ansprüche, dadurch gekennzeichnet, daß die Auswertungen nach der Formel

$$I\,(r,\,phi) = a + b \cos \left(\frac{2\Pi r}{g}\,.\,\sin\,(phi - phi_o) + \alpha\right)$$

oder einer abgeleiteten Formel erfolgen, worin bedeuten:

I =　　　　Intensität auf einem Punkt des Sensors (5)

r =　　　　Radius = Abstand des Punktes auf dem Projektionsgitter (2) bzw. auf den Projektionsgittern von einem Bezugspunkt des Projektionsgitters (2), bzw. der Projektionsgitter, vorzugsweise des Drehpunkts des Projektionsgitters (2)

phi =　　　Drehwinkel des Projektionsgitters (2) zwischen der ersten und der zweiten Auswertung bzw. zwischen dem ersten und dem zweiten Projektionsgitter

$phi_o$ =　　　Winkel des Punktes auf dem Projektionsgitter (2) zu einer Bezugsgeraden

a =　　　　Untergrundhelligkeit

b =　　　　Kontrast

g =　　　　Gitterkonstante des Projektionsgitters (2)

$\alpha$ =　　　　Phasenkonstante

5. Verfahren nach einem der vorhergehenden Ansprüche, dadurch gekennzeichnet, daß die Auswertungen nach einer Phasenshiftmethode erfolgen.

6. Verfahren nach einem der vorhergehenden Ansprüche, dadurch gekennzeichnet, daß die Auswertungen nach einer Fourier-Transformation erfolgen.

7. Verfahren nach einem der vorhergehenden Ansprüche, dadurch gekennzeichnet, daß die Auswertungen mit phasenverschobenen Bildern erfolgen, die gleichzeitig eingelesen werden.

8. Vorrichtung zur Bestimmung der Absolut-Koordinaten eines Objekts (1), bestehend aus

einer Lichtquelle (6),

einer Projektionsoptik, insbesondere einem Projektionsobjektiv (7),

einem Projektionsgitter (2), das durch die Projektionsoptik (7) auf das Objekt (1) abgebildet wird,

einem Sensor (5) zum Aufnehmen des von dem Objekt (1) reflektierten Lichts (4)

und einem Objektiv (8), das das von dem Objekt (1) reflektierte Licht (4) auf den Sensor (5) abbildet,

**dadurch gekennzeichnet,**

daß das Projektionsgitter (2) und/oder der Sensor (5) drehbar ist

und daß eine Auswerteeinheit vorhanden ist, die die Aufnahmen des Sensors (5) bei mindestens zwei verschiedenen Winkellagen des Projektionsgitters (2) bzw. des Sensors (5) auswertet und daraus die Absolutkoordinaten des Objekts (1) bestimmt.

9. Vorrichtung zum Durchführen des Verfahrens gemäß Anspruch 3 zur Bestimmung der Absolut-Koordinaten eines Objekts (1), bestehend aus

einer Lichtquelle (6),

einer Projektionsoptik, insbesondere einem Projektionsobjektiv (7),

einem Projektionsgitter (2), das durch die Projektionsoptik (7) auf das Objekt (1) abgebildet wird,

einem Sensor (5) zum Aufnehmen des von dem Objekt (1) reflektierten Lichts (4)

und einem Objektiv (8), das das von dem Objekt (1) reflektierte Licht (4) auf den Sensor (5) abbildet,

**gekennzeichnet durch**

ein erstes Projektionsgitter (2) für Licht (3) einer ersten Farbe,

ein zweites Projektionsgitter, das zum ersten Projektionsgitter um einem bestimmten Winkel gedreht ist, für Licht einer zweiten Farbe,

zwei Sensoren oder einem für die beiden Farben empfindlichen Sensor (5)

und eine Auswerteeinheit, die die Aufnahmen des oder der Sensoren (5) auswertet und daraus die Absolut-Koordinaten des Objekts (1) bestimmt.

10. Vorrichtung nach einem der Ansprüche 8 oder 9, dadurch gekennzeichnet, daß die Auswertungen nach der Formel

$$I(r, phi) = a + b \cos\left(\frac{2\Pi r}{g} \cdot \sin(phi - phi_o) + \alpha\right)$$

oder einer daraus abgeleiteten Formel erfolgen.

11. Vorrichtung nach einem der Ansprüche 8 bis 10, dadurch gekennzeichnet, daß die Auswertungen nach einer Phasenshift-methode erfolgen.

12. Vorrichtung nach einem der Ansprüche 8 bis 11, dadurch gekennzeichnet, daß die Auswertungen nach einer Fourier-Transformation erfolgen.

13. Vorrichtung nach einem der Ansprüche 8 bis 12, dadurch gekennzeichnet, daß die Auswertungen mit phasenverschobenen Bildern erfolgen, die gleichzeitig eingelesen werden.

14. Vorrichtung nach einem der Ansprüche 8 bis 13, gekennzeichnet durch ein Referenzgitter (9), durch das das von dem Objekt (1) reflektierte Licht (4) auf den Sensor (5) abgebildet wird.

15. Vorrichtung nach Anspruch 14, dadurch gekennzeichnet, daß das Referenzgitter (9) von dem Sensor (5), vorzugsweise einem CCD-Sensor, gebildet wird.

16. Vorrichtung nach einem der Ansprüche 8 bis 15, dadurch gekennzeichnet, daß die Hauptebenen (10, 10') der Objektive (7, 8) in derselben Ebene liegen.

17. Vorrichtung nach einem der Ansprüche 8 bis 16, dadurch gekennzeichnet, daß die Brennweiten der Objektive (7, 8) gleich groß sind.

18. Vorrichtung nach einem der Ansprüche 8 bis 17, dadurch gekennzeichnet, daß das Projektionsgitter (2) eine sinusförmige oder rampenförmige Transparenz aufweist.

19. Vorrichtung nach einem der Ansprüche 8 bis 18, dadurch gekennzeichnet, daß die Gitterkonstante und/oder die Transparenz des Projektionsgitters (2) einstellbar und/ oder drehbar ist.

20. Vorrichtung nach einem der Ansprüche 8 bis 19, dadurch gekennzeichnet, daß das Projektionsgitter (2) von einem LCD-Display gebildet wird.

**Claims**

1. Method for determining the absolute coordinates of an object (1), in which the object (1) is illuminated with light (3) through a projection grating (2),

in which the light (4) which is reflected from the object (1) is recorded by a sensor (5) and in which the record of the sensor (5) is evaluated,

characterized

in that a first record and evaluation are carried out when the projection grating (2) and the sensor (5) are in a first position, in that, subsequently, the projection grating (2) and/or the sensor (5) are rotated through a specific angle and a record record and evaluation of the sensor (5) are carried out, and in that the absolute coordinates of the object (1) are determined from the evaluations.

2. Method according to Claim 1, characterized in that the projection grating is rotated through a specific angle.

3. Method for determining the absolute coordinates of an object (1),

in which the object (1) is illuminated with light (3) through a projection grating (2) in which the light (4) which is reflected from the object (1) is recorded by a sensor (5) and in which the record of the sensor (5) is evaluated,

characterized

in that the object (1) is illuminated with light (3) of a first colour through a first projection grating (2), and is illuminated with light of a second colour through a second projection grating, which is rotated through a specific angle with respect to the first projection grating, in that the light which is reflected from the object (1) is recorded by two sensors or by one sensor (5) which is sensitive to both colours, in that the records of the sensor or sensors (5) are evaluated, and in that the absolute coordinates of the object (1) are determined from the evaluations.

4. Method according to any of the preceding claims, characterized in that the evaluations are carried out in accordance with the formula

$$I\,(r,\,phi) = a + b \cos\left(\frac{2\,\pi\,r}{g}\,.\,\sin\,(phi - phi_0) + \alpha\right)$$

where:

| | |
|---|---|
| I = | Intensity at a point on the sensor (5) |
| r = | Radius = Distance between the point on the projection grating (2) or on the projection gratings and a reference point on the projection grating (2) or on the projection gratings, preferably the centre of rotation of the projection grating (2) |
| phi = | Rotation angle of the projection grating (2) between the first and the second evaluation and between the first and the second projection grating |
| $phi_o$ = | Angle between the point of projection grating (2) and a reference straight line |
| a = | Background brightness |
| b = | Contrast |
| g = | Grating constant of the projection grating (2) |
| $\alpha$ = | Phase constant |

5. Method according to one of the preceding claims, characterized in that the evaluations are carried out in accordance with a phase shift method.

6. Method according to one of the preceding claims, characterized in that the evaluations are carried out in accordance with a Fourier transformation.

7. Method according to one of the preceding claims, characterized in that the evaluations are carried out with phase-shifting images which are read in simultaneously.

8. Device for determining the absolute coordinates of an object (1), comprising

a light source (6), projection optics, in particular a projection objective (7), a projection grating (2) which is imaged on the object (1) by the projection optics (7), a sensor (5) for recording the light (4) which is reflected from the object (1) and an objective (8) which images the light (4) which is reflected from the object (1) on the sensor (5),

characterized

in that the projection grating (2) and/or the sensor (5) can be rotated and in that an evaluation unit is provided which evaluates the records of the sensor (5) at at least two different angular positions of the projection grating (2) and of the sensor (5), and determines the absolute coordinates of the object (1) from this.

9. Device for carrying out the method according to Claim 3 for determining the absolute coordinates of an object (1) comprising

   a light source (6),
   projection optics, in particular a projection objective (7),
   a projection grating (2) which is imaged on the object (1) by the projection optics (7),
   a sensor (5) for recording the light (4) which in reflected from the object (1)
   and an objective (8) which images the light (4) which is reflected from the object (1) on the sensor (5),

   charactecized by

   a first projection grating (2) for light (3) of a first colour,
   a second projection grating, which is rotated through a specific angle with respect to the first projection grating, for light of a second colour, two sensors or one sensor (5) sensitive to both colours, and an evaluation unit which evaluates the records of the sensor or sensors (5) and determines the absolute coordinates of the object (1) from this.

10. Device according to one of Claims 8 or 9, characterised in that the evaluations are carried out in accordance with the formula

$$l\,(r, phi) = a + b \cos\left(\frac{2\,\pi\,r}{g}\,.\,\sin\,(phi - ph_0) + \alpha\right)$$

   or a formula which is derived from this.

11. Device according to one of Claims 8 to 10, characterized in that the evaluations are carried out in accordance with a phase shift method.

12. Device according to one of Claims 8 to 11, characterized in that the evaluations are carried out in accordance with a Fourier transformation.

13. Device according to one of Claims 8 to 12, characterized in that the evaluations are carried out with phase-shifting images which are read in simultaneously.

14. Device according to one of Claims 8 to 13, characterized by a reference grating (9) through which the light (4) which in reflected from the object (1) is imaged on the sensor (5).

15. Device according to Claim 14, characterized in that the reference grating (9) is formed by the sensor (5), preferably a CCD sensor.

16. Device according to one of Claims 8 to 15, characterized in that the main planes (10, 10') of the objectives (7, 8) lie on the same plane.

17. Device according to one of Claims 8 to 16, characterized in that the focal lengths of the objectives (7, 8) are equal.

18. Device according to one of Claims 8 to 17, characterized in that the projection grating (2) has a transparency which is sinusoidal or is in the form of a ramp.

19. Device according to one of Claims 8 to 18, characterized in that the grating constant and/or the transparency of the projection grating (2) can be adjusted and/or rotated.

20. Device according to one of Claims 8 to 19, characterized in that the projection grating (2) is formed by an LCD display.

**Revendications**

1. Procédé pour déterminer les coordonnées absolues d'un objet (1), où l'objet (1) est exposé au rayonnement d'une lumière (3) travers une grille de projection (2), où la lumière (4) réfléchie par l'objet (1) est reçue par un capteur (5) et où la réception du capteur (5) est évaluée, caractérisé en ce que l'on procède dans une premeière position de la grille de projection (2) et du capteur (5) à une première réception et évaluation, qu'on fait tourner ensuite la grille de projection (2) et/ou le capteur (5) suivant un angle défini et qu'on procède à une deuxième réception et évaluation du capteur (5) et en ce que l'on détermine à partir des évaluations les coordonnées absolues de l'objet (1).

2. Procédé selon la revendication 1, caractérisé en ce que l'on fait tourner la grille de projection suivant un angle défini.

3. Procédé pour déterminer Les coordonnées absolues d'un objet (1), où l'objet (1) est exposé au rayonnement d'une lumière (3) à travers une grille de projection (2), où la lumière (4) réfléchie par l'objet (1) est reçue par un capteur (5) et où la réception du capteur (5) est évaluée, caractérisé en ce que l'objet (1) est exposé à travers une première grille de projection (2) à la lumière (3) d'une première couleur et à travers une deuxième grille de projection qui a été tournée par rapport à la première grille de projection suivant un angle défini, à la lumière d'une deuxième couleur, en ce que la lumière réfléchie par l'objet (1) est reçue par deux capteurs ou par un capteur (5) réagissant aux deux couleurs, en ce que les réceptions du ou des capteurs (5) sont évaluées et en ce qu'on détermine à partir des évaluations les coordonnées absolues de l'objet (1).

4. Procédé selon l'une des revendications précédentes, caractérisé en ce que les évaluations ont lieu selon la formule

$$I\,(r,\,phi) = a + b\,\cos\left(\frac{2\,\pi\,r}{g}\right) . \sin\,(phi - phi_o) + \alpha\,)$$

ou à partir d'une formule dérivée, où :

I = intensité sur un point du capteur (5)
r = rayon = écart du point sur la grille de projection (2) et, respectivement sur les grilles de projection par rapport un point de référence de la grille de projection (2), et, respectivement des grilles de projection, de préférence du point de rotation de la grille de projection (2)
phi = angle de rotation de la grille de projection (2) entre la première et la deuxième évaluation et, respectivement entre la première et la deuxième grille de projection
$phi_o$ = angle du point sur la grille de projection (2) relativement à une droite de référence
a = luminosité du fond
b = contrast
g = constante de la grille de projection (2)
$\alpha$ = constante de phase.

5. Procédé selon l'une des revendications précédentes caractérisé en ce que Les évaluations ont lieu suivant une méthode de décalage des phases.

6. Procédé selon l'une des revendications précédentes, caractérisé en ce que les évaluations ont lieu suivant une transformation de Fourier.

7. Procédé selon l'une des revendications précédentes, caractérisé en ce que les évaluations ont lieu avec des images décalées de phase qui sont entrées simultanément.

8. Dispositif pour déterminer les coordonnées absolues d'un objet (1), comportant
une source de lumière (6), une optique de projection, notamment un objectif de projection (7), une grille de projection (2) qui est représentée par l'optique de projection (7) sur l'objet (1), un capteur (5) pour recevoir la lumière (4) réfléchie par l'objet (1) et un objectif (8) qui représente la lumière (4) réfléchie par l'objet (1) sur le capteur (5), caractérisé en ce que la grille de projection (2) et/ou le capteur (5) peuvent être tournés et en ce qu'il est prévu une unité d'évaluation qui évalue les réceptions du capteur (5) pour au moins deux positions angulaires différentes de la grille de projection (2) et, respectivement du capteur (5) et qui détermine à partir de celles-ci les coordonnées absolues de l'objet (1).

9. Dispositif pour la mise en oeuvre du procédé selon la revendication 3 pour déterminer les coordonnées absolues d'un objet (1), comportant
une source de lumière (6), une optique de projection, notamment un objectif de projection (7), une grille de projection (2) qui est représentée par l'optique de projection (7) sur l'objet (1), un capteur (5) pour recevoir la lumière (6) réfléchie par l'objet (1) et un objectif (8) qui représente la lumière (4) réfléchie par l'objet (1) sur le capteur (5), caractérisé par une première grille de projection (2) pour une lumière (3) d'une première couleur, une deuxième grille de projection qui a été tournée par rapport à la première grille de projection suivant un angle défini, pour une lumière d'une deuxième couleur, deux capteurs ou un capteur (5) réagissant aux deux couleurs et par une unité d'évaluation qui évalue les réceptions du ou des capteurs (5) et qui détermine à partir de celles-ci les coordonnées absolues de l'objet (1).

10. Dispositif selon l'une des revendications 8 ou 9, caractérisé en ce que les évaluations ont lieu selon la formule

$$I\,(r,\,phi) = a + b\,\cos\left(\frac{2\,\pi\,r}{g}\right) . \sin\,(phi - phi_o) + \alpha\,)$$

ou une formule dérivée à partir de celle-ci.

11. Dispositif selon l'une des revendications 8 à 10, caractérisé en ce que les évaluations ont lieu selon une méthode de décalage de phases.

12. Dispositif selon l'une des revendications 8 à 11, caractérisé en ce que les évaluations ont lieu selon une transformation de Fourier.

13. Dispositif selon l'une des revendications 8 à 12, caractérisé en ce que les évaluations ont lieu avec des images décalées de phase qui sont entrées simultanément.

14. Dispositif selon l'une des revendications 8 à 13, caractérisé par une grille de référence (9) par laquelle la lumière (4) réfléchie par l'objet (1) est représentée sur le capteur (5).

**15.** Dispositif selon la revendication 14, caractérisé en ce que la grille de référence (9) est formée par le capreur (5), de préférence par un capteur CCD.

**16.** Dispositif selon l'une des revendications 8 à 15, caractérisé en ce que les plans principaux (10, 10') des objectifs (7, 8) se situent dans le même plan.

**17.** Dispositif selon l'une des revendications 8 à 16, caractérisé en ce que les distances focales des objectifs (7, 8) sont de la même grandeur.

**18.** Dispositif selon l'une des revendications 8 à 17, caractérisé en ce que la grille de projection (2) a une transparence sinusoïdale ou en forme de rampe.

**19.** Dispositif selon l'une des revendications 8 à 18, caractérisé en ce que la constante de grille et/ou la transparence de la grille de projection (2) est réglable et/ou peut être tournée.

**20.** Dispositif selon l'une des revendications 8 à 19, caractérisé en ce que la grille de projection (2) est constituée par un affichage à cristaux liquides.